# EUROPEAN PATENT SPECIFICATION

(11) **EP 3 453 892 B1**
(45) Date of publication and mention of the grant of the patent: **24.06.2020**
(21) Application number: 18189764.6
(22) Date of filing: 20.08.2018
(51) Int. Cl.: F01D 17/16, F15B 11/20, F15B 18/00, F15B 20/00

(54) **ELECTRIC HYDRAULIC ACTUATION SYSTEM FOR A SAFETY CRITICAL APPLICATION**
ELEKTRISCH-HYDRAULISCHES BETÄTIGUNGSSYSTEM FÜR EINE SICHERHEITSKRITISCHE ANWENDUNG
SYSTÈME D'ACTIONNEMENT HYDRAULIQUE ÉLECTRIQUE POUR UNE APPLICATION DE SÉCURITÉ CRITIQUE

(30) Priority: 22.08.2017 US 201715682906
(43) Date of publication of application: 13.03.2019
(73) Proprietor: Hamilton Sundstrand Corporation, Charlotte, NC 28217-4578 (US)
(72) Inventor: MASTROCOLA, Naison E., Goshen, CT Connecticut 06756 (US)
(74) Representative: Dehns

(56) References cited:
- EP-A2- 2 514 927
- JP-A- H11 280 701
- JP-A- 2002 167 721
- US-A- 3 800 831
- US-A- 5 857 488

## Description

### BACKGROUND OF THE INVENTION

This application relates to a system which is relatively lightweight, but provides reliable control for an actuation system of a safety critical system such as on aircraft.

Aircraft applications are becoming increasingly complex. Also, demands on reducing the weight for such systems are becoming more and more important.

One such actuation system is for changing an angle of incidence of variable vanes in a compressor section. As known, variable vanes in a compressor section for a gas turbine engine can be moved between various angles during different flight conditions. Variable vanes controls are for example described in EP2514927A2.

In the prior art, the system has been generally fully mechanical. A constant pressure hydraulic pump has provided hydraulic fluid through hydraulic lines and electric valves. There are disadvantages to a fully mechanical actuation system.

One disadvantage is that the hydraulic pump continuously draws engine power and must be sized for worst case scenario. Also, the actuator's performance is tied to the pump speed and limits performance at engine idle. A single pump providing a common fluid source for all actuators increases a risk of leaks and contamination.

Feedback signals are remote from an engine controller, which is undesirable. The thermal load on the actuation system is additive from all of the actuators to the fluid. An actuator's health and prognostic is limited by the bandwidth of the engine controller.

Traditionally, the actuator controls are centralized. As an example, the actuator controls may be contained in a full authority digital electronic controller ("FADEC") on an associated gas turbine engine. The FADEC performs numerous critical functions, which limits the processor bandwidth for the actuator control computation.

One possible solution would be to provide electric driven pumps for each actuator. However, such a system can result in a great increase in weight.

### SUMMARY OF THE INVENTION

An actuation system is provided in claim 1.

These and other features may be best understood from the following drawings and specification.

### BRIEF DESCRIPTION OF THE DRAWINGS

Figure 1A schematically shows a system for changing an angle of incidence of a variable vane in a gas turbine engine
Figure 1B shows distinct angles.
Figure 2 shows a first system schematic.
Figure 3 shows an alternative system.

### DETAILED DESCRIPTION

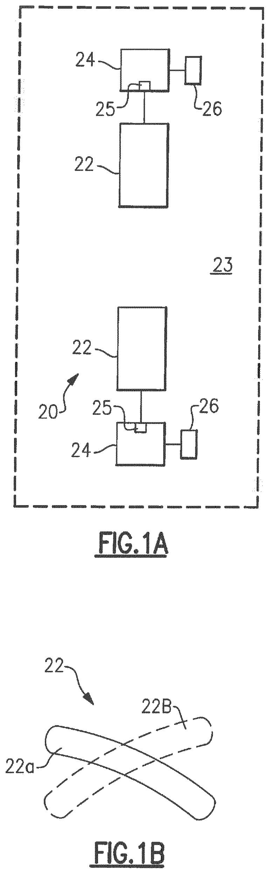

A system 20 which may benefit from this disclosure is illustrated in Figure 1. System 20 includes a component, disclosed in this embodiment as a synchronization ring 24 for changing an angle of incidence of a plurality of variable vanes 22, which may be in a compressor section of a gas turbine engine 23, shown schematically. While this particular application is disclosed, it should be understood that the broad teachings of this disclosure would extend to other actuation systems, which incorporate multiple actuators.

The synchronization ring 24 may include a cam groove 25. As the cam groove 25 moves axially, it cams a portion of the variable vanes 22, such that they turn. A plurality of actuators 26 moves the cam ring 24.

Figure 1B shows two distinct angles of incidence 22A and 22B of the variable vanes 22. These aspects are as known and a worker of ordinary skill in the art would recognize how, when, and why to change the angle of incidence.

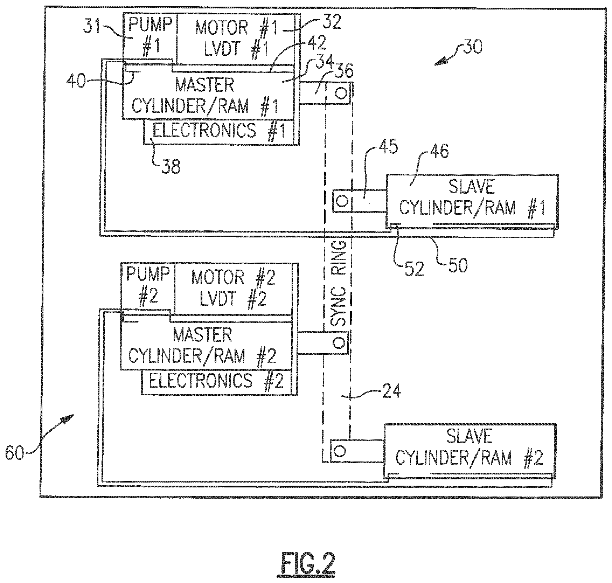

Figure 2 shows a first system 30 for changing the angle. A first pump 31 is provided with an electric motor 32 and a linear variable displacement transducer (LVDT). As known, the LVDT is operable to monitor position of a moving element, such as a piston 36 within a master cylinder 34. Electronics 38 are also disclosed. The piston 36 within the master cylinder 34 is shown attached to the sync ring 24. System 30 replaces the prior art actuators of Figure 1A.

As shown, fluid lines 40 and 42 communicate the pump 31 to the cylinder 36. Secondary fluid lines, or hydraulic rails, 50 and 52 communicate the pump 31 to a second actuator cylinder 46 driving a piston 45, which is also connected to drive the sync ring 24.

In the prior art systems, a pump displacement is typically directly proportional to an engine speed. Most of this flow is typically bypassed and sent to coolers and returned to a tank. This is all wasted energy. The fluid that is supplied to the actuators is modulated by servo valves to achieve a desired position.

The instant disclosure improved on this prior system, in that no valves are required, and the motor and pump combination provides the flow regulator function. If no movement of the sync ring is desired, there will be no flow, and the motor simply holds pressure.

Another benefit of the Figure 2 arrangement is that while one of the cylinders is extending, the other will be retracting. That is, should it be desired to move sync ring 24 to the right, the ram will be extending into the cylinder associated with unit 46, and the ram will be leaving the cylinder associated with unit 34. Thus, the amount of fluid necessary is typically tailored to the actual needed volume. No reservoir is needed.

A second system 60 which is effectively identical to the system 30 disclosed with regard to pump 31 is also included.

The benefits of the electric controlled system are achieved without the requirement of having individual pumps/motors/electronics for each actuator cylinder 34/46 in the systems 30, 46. That is, there are at least two pumps, and more cylinders than pumps. Thus, weight and cost benefits are achieved.

In addition, while still providing redundant pumps and motors, a safety aspect is achieved in that even if one of the pumps fails, there is at least one other pump/motor combination which can serve to move the variable vanes to a safer position should a failure occur.

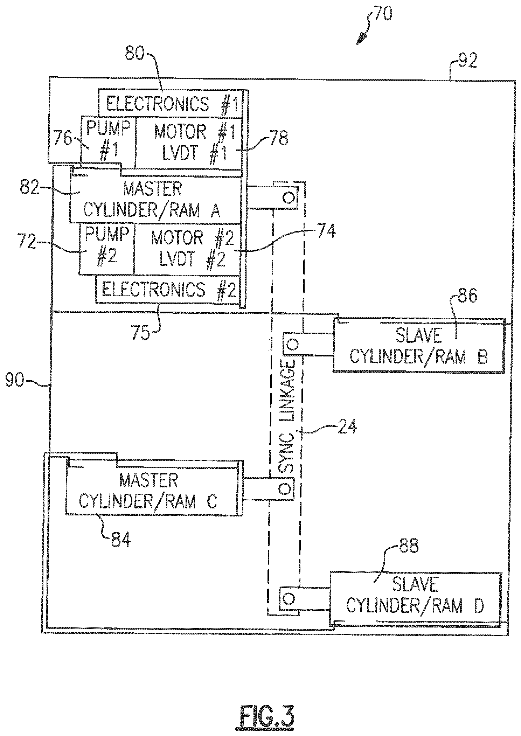

Figure 3 shows an embodiment 70 wherein a cylinder 82 is provided with a pair of pumps 72 and 76. A motor 74 drives pump 72 and is provided with associated electronics 75. The pump 76 is driven by a motor 78 and provided with associated electronics 80. Rails 90 and 92 provide the hydraulic fluid from pump 76 to not only cylinder 82, but cylinders 84, 86, and 88. All of the cylinders include pistons which drive a sync ring 24.

Should there be a failure of pump 76, then a controller can switch to operation of the pump 72, which also communicates with the rails 90 and 92 (not illustrated, but built into this schematic).

Also, pump 72 can be used to assist transient conditions, allowing reduction of the power draw by only using pump 72 ta high load conditions.

The duty cycle between the pumps can also be shared. Each of the motor and pump units can be sized for half of a maximum flow and pressure, and thus half the power. This decreases weight, yet maintains safety margins.

The disclosure thus results in a system which is relatively lightweight, yet provides redundant control to ensure that the safety critical operation of the system, such as the position of the variable vane in a compressor section for a gas turbine engine, will be achieved.

With the disclosed "local" or distributed control architecture, there is a dedicated controller local to the actuator. In addition, the added weight of running wires to communicate to the FADEC, as described in the prior art, is reduced.

Although an embodiment of this invention has been disclosed, a worker of ordinary skill in this art would recognize that certain modifications would come within the scope of this invention. For that reason, the following claims should be studied to determine the true scope and content of this invention.

## Claims

1. An actuation system for variable vanes for use in a compressor section of a gas turbine engine comprising:
a sync ring (24) and a plurality of cylinders (84, 86, 88), a piston (36) in operable communication with each of said cylinders and being configured to move said sync ring (24) axially to, in turn, change an angle of incidence of a plurality of variable vanes; and electric motors and
a plurality of pumps (72, 76) in fluidic communication with said plurality of cylinders, and said plurality of pumps each being driven by said electric motors (74), and wherein a number of said pumps is less than a number of said cylinders.

2. The actuation system for variable vanes for use in a compressor section of a gas turbine engine as set forth in claim 1, wherein each of said electric motors (74) is also provided with a position transducer, and preferably wherein each of said plurality of pumps (72, 76) and said electric motors (74) is provided with control electronics, and more preferably wherein each of said plurality of pumps (72, 76) is in fluid communication with a pair of said cylinders.

3. The actuation system for variable vanes for use in a compressor section of a gas turbine engine as set forth in claim 2, wherein there is at least one pump in said second plurality of pumps which is a primary pump and said primary pump driving said first plurality of fluid driven cylinders and a control for said system switching between said primary pump and a secondary pump to provide the supply of fluid.

4. The actuation system for variable vanes for use in a compressor section of a gas turbine engine as set forth in claim 3, wherein said first plurality of fluid cylinders supplied by said primary pump is at least four.

5. The actuation system for variable vanes for use in a compressor section of a gas turbine engine as set forth in any of claims 1 to 4, wherein each of said second plurality of pumps drives a pair of first plurality of fluid driven cylinders.

6. The actuation system for a component as set forth in claim 5, wherein at least one of said pair of said first plurality of fluid driven cylinders is arranged relative to said component, and relative to the other of said pair of first plurality of fluid driven cylinders, such that when moving said component in a first desired direction, said first of said pair of first plurality of fluid driven cylinders is extending, and a second of said pair of first plurality of fluid driven cylinders is retracting.

7. The actuation system for variable vanes for use in a compressor section of a gas turbine engine as set forth in any of claims 1 to 6, wherein there is at least one pump in said second plurality of pumps which is a primary pump and said primary pump driving said first plurality of fluid driven cylinders and a control for said system switching between said primary pump and a secondary pump to provide the supply of fluid.

8. The actuation system for variable vanes for use in a compressor section of a gas turbine engine as set forth in claim 7, wherein said first plurality of fluid cylinders supplied by said primary pump is at least four.

## Patentansprüche

1. Betätigungssystem für verstellbare Schaufeln zur Verwendung in einem Kompressorabschnitt eines Gasturbinentriebwerks, das Folgendes umfasst:
einen Synchronisations-Ring (24) und eine Vielzahl von Zylindern (84, 86, 88), einen Kolben (36), der in Wirkverbindung mit jedem der Zylinder steht und dazu konfiguriert ist, den Synchronisations-Ring (24) axial zu bewegen, um wiederum einen Einstellwinkel einer Vielzahl von verstellbaren Schaufeln zu ändern; und
Elektromotoren und eine Vielzahl von Pumpen (72, 76) in Fluidverbindung mit der Vielzahl von Zylindern, wobei jede der Vielzahl von Pumpen durch die Elektromotoren (74) angetrieben wird und wobei eine Anzahl der Pumpen kleiner als eine Anzahl der Zylinder ist.

2. Betätigungssystem für verstellbare Schaufeln zur Verwendung in einem Kompressorabschnitt eines Gasturbinentriebwerks nach Anspruch 1, wobei jeder der Elektromotoren (74) auch mit einem Positionswandler bereitgestellt ist, und wobei jede der Vielzahl von Pumpen (72, 76) und die Elektromotoren (74) vorzugsweise mit Steuerungselektronik bereitgestellt sind, und wobei jede der Vielzahl von Pumpen (72, 76) stärker bevorzugt in Fluidverbindung mit einem Paar der Zylinder steht.

3. Betätigungssystem für verstellbare Schaufeln zur Verwendung in einem Kompressorabschnitt eines Gasturbinentriebwerks nach Anspruch 2, wobei es mindestens eine Pumpe in der zweiten Vielzahl von Pumpen gibt, die eine Primärpumpe ist, wobei die Primärpumpe die erste Vielzahl von fluidangetriebenen Zylindern antreibt und eine Steuerung für das System zwischen der Primärpumpe und einer Sekundärpumpe umschaltet, um die Fluidversorgung bereitzustellen.

4. Betätigungssystem für verstellbare Schaufeln zur Verwendung in einem Kompressorabschnitt eines Gasturbinentriebwerks nach Anspruch 3, wobei die erste Vielzahl von Fluidzylindern, die durch die Primärpumpe versorgt wird, mindestens vier beträgt.

5. Betätigungssystem für verstellbare Schaufeln zur Verwendung in einem Kompressorabschnitt eines Gasturbinentriebwerks nach einem der Ansprüche 1 bis 4, wobei jede der zweiten Vielzahl von Pumpen ein Paar der ersten Vielzahl von fluidangetriebenen Zylindern antreibt.

6. Betätigungssystem für eine Komponente nach Anspruch 5, wobei mindestens einer des Paars der ersten Vielzahl von Zylindern derart in Bezug auf die Komponente und in Bezug auf den anderen des Paars der ersten Vielzahl von fluidangetriebenen Zylindern angeordnet ist, dass, wenn die Komponente in eine erste gewünschte Richtung bewegt wird, sich der erste des Paars der ersten Vielzahl von fluidgetriebenen Zylindern ausdehnt und sich ein zweiter des Paars der ersten Vielzahl von fluidangetriebenen Zylinder zusammenzieht.

7. Betätigungssystem für verstellbare Schaufeln zur Verwendung in einem Kompressorabschnitt eines Gasturbinentriebwerks nach einem der Ansprüche 1 bis 6, wobei es mindestens eine Pumpe in der zweiten Vielzahl von Pumpen gibt, die eine Primärpumpe ist, wobei die Primärpumpe die erste Vielzahl von fluidangetriebenen Zylindern antreibt und eine Steuerung für das System zwischen der Primärpumpe und einer Sekundärpumpe umschaltet, um die Fluidversorgung bereitzustellen.

8. Betätigungssystem für verstellbare Schaufeln zur Verwendung in einem Kompressorabschnitt eines Gasturbinentriebwerks nach Anspruch 7, wobei die erste Vielzahl von Fluidzylindern, die durch die Primärpumpe versorgt wird, mindestens vier beträgt.

## Revendications

1. Système d'actionnement pour aubes variables à utiliser dans une section de compresseur d'un moteur à turbine à gaz comprenant :
un anneau de synchronisation (24) et une pluralité de cylindres (84, 86, 88), un piston (36) en communication opérationnelle avec chacun desdits cylindres et étant configuré pour déplacer ledit anneau de synchronisation (24) axialement pour, à son tour, modifier un angle d'incidence d'une pluralité d'aubes variables ; et
des moteurs électriques et une pluralité de pompes (72, 76) en communication fluidique avec ladite pluralité de cylindres, et ladite pluralité de pompes étant chacune entraînée par lesdits moteurs électriques (74), et dans lequel un nombre desdites pompes est inférieur à un nombre desdits cylindres.

2. Système d'actionnement pour aubes variables à utiliser dans une section de compresseur d'un moteur à turbine à gaz selon la revendication 1, dans lequel chacun desdits moteurs électriques (74) est également pourvu d'un transducteur de position, et de préférence dans lequel chacun de ladite pluralité de pompes (72, 76) et desdits moteurs électriques (74) est équipé d'une électronique de commande, et plus préférablement dans lequel chacune de ladite pluralité de pompes (72, 76) est en communication fluidique avec une paire desdits cylindres.

3. Système d'actionnement pour aubes variables à utiliser dans une section de compresseur d'un moteur à turbine à gaz selon la revendication 2, dans lequel il y a au moins une pompe dans ladite seconde pluralité de pompes qui est une pompe primaire et ladite pompe primaire entraînant ladite première pluralité de cylindres entraînés par fluide et une commande pour permettre audit système de commuter entre ladite pompe primaire et une pompe secondaire afin de fournir l'alimentation en fluide.

4. Système d'actionnement pour aubes variables à utiliser dans une section de compresseur d'un moteur à turbine à gaz selon la revendication 3, dans lequel ladite première pluralité de cylindres de fluide fournis par ladite pompe primaire est au moins égale à quatre.

5. Système d'actionnement pour aubes variables à utiliser dans une section de compresseur d'un moteur à turbine à gaz selon l'une quelconque des revendications 1 à 4, dans lequel chacune de ladite seconde pluralité de pompes entraîne une paire de la première pluralité de cylindres entraînés par fluide.

6. Système d'actionnement pour un composant selon la revendication 5, dans lequel au moins l'un de ladite paire de ladite première pluralité de cylindres entraînés par fluide est agencé par rapport audit composant, et par rapport à l'autre de ladite paire de la première pluralité de cylindres entraînés par fluide, de sorte que, lors du déplacement dudit composant dans une première direction souhaitée, ledit premier de ladite paire de la première pluralité de cylindres entraînés par fluide s'étend, et un second de ladite paire de la première pluralité de cylindres entraînés par fluide se rétracte.

7. Système d'actionnement pour aubes variables à utiliser dans une section de compresseur d'un moteur à turbine à gaz selon l'une quelconque des revendications 1 à 6, dans lequel il y a au moins une pompe dans ladite seconde pluralité de pompes qui est une pompe primaire et ladite pompe primaire entraînant ladite première pluralité de cylindres entraînés par fluide et une commande pour permettre audit système de commuter entre ladite pompe primaire et une pompe secondaire afin de fournir l'alimentation en fluide.

8. Système d'actionnement pour aubes variables à utiliser dans une section de compresseur d'un moteur à turbine à gaz selon la revendication 7, dans lequel ladite première pluralité de cylindres de fluide fournis par ladite pompe primaire est au moins égale à quatre.
